# FASCICULE DE BREVET EUROPEEN

(11) **EP 2 821 612 B1**
(45) Date de publication et mention de la délivrance du brevet: **02.12.2015**
(21) Numéro de dépôt: 14173623.1
(22) Date de dépôt: 24.06.2014
(51) Int. Cl.: F01N 5/02

(54) **Système moto propulseur pour véhicule hybride**
Motorantriebssystem für Hybridfahrzeug
Power train system for hybrid vehicle

(30) Priorité: 01.07.2013 FR 1356398
(43) Date de publication de la demande: 07.01.2015
(73) Titulaire: PEUGEOT CITROËN AUTOMOBILES SA, 78140 Vélizy-Villacoublay (FR)
(72) Inventeur: Pogam, Matthieu, 78400 CHATOU (FR); Diny, Mouad, 92600 ASNIERES SUR SEINE (FR)

(56) Documents cités:
- EP-A1- 1 249 586
- EP-A1- 1 326 017
- DE-A1-102006 059 591
- DE-A1-102011 017 762

## Description

La présente invention est relative à un système moto propulseur pour véhicule hybride.

Plus particulièrement, l'invention concerne un système moto propulseur pour véhicule hybride, comprenant un moteur thermique dont le fonctionnement est susceptible de produire des gaz d'échappement, une boucle de transformation, via un fluide, de l'énergie des gaz d'échappement en énergie mécanique, cette boucle comprenant un arbre de motorisation auxiliaire d'énergie mécanique relié à un train épicycloïdal d'hybridation.

Ce genre de système est connu du document EP1249586 permettant, outre la traction du véhicule par le moteur thermique, une double hybridation par moteur électrique et motorisation auxiliaire par les gaz d'échappement via la boucle de transformation. Le train épicycloïdal et des limiteurs de couple permettent de gérer les hybridations. Une sortie du train épicycloïdal est associée à un arbre moteur principal du moteur thermique via un embrayage de gestion d'apport d'hybridation. Un tel système est complexe et onéreux, d'autant qu'il implique l'utilisation de deux hybridations.

La présente invention a notamment pour but de remédier aux inconvénients de l'art antérieur en proposant des solutions alternatives.

A cet effet, l'invention a pour objet un système moto propulseur pour véhicule hybride, comprenant un moteur thermique dont le fonctionnement est susceptible de produire des gaz d'échappement, une boucle de transformation, via un fluide, de l'énergie des gaz d'échappement en énergie mécanique, cette boucle comprenant un arbre de motorisation auxiliaire d'énergie mécanique relié à un train épicycloïdal d'hybridation. Ce train épicycloïdal comporte une entrée d'hybridation entraînée par l'arbre de motorisation auxiliaire, une entrée principale reliée à un arbre moteur principal relié à un volant moteur du moteur thermique et une sortie de traction qui est adaptée à être reliée à au moins une roue motrice du véhicule hybride.

Dans divers modes de réalisation du système selon l'invention, on peut éventuellement avoir recours en outre à l'une et/ou à l'autre des dispositions suivantes :
- l'entrée d'hybridation est associée à un frein prévu pour être activé à freinage lorsque le système moto propulseur a sa boucle de transformation d'énergie qui est inactive pour un déplacement du véhicule avec la seule traction du moteur thermique ;
- l'entrée d'hybridation est active quand le niveau de charge d'énergie thermique produite par le moteur thermique est compris entre une valeur de premier seuil et une valeur de second seuil de puissance thermique à l'échappement ;
- la sortie de traction est reliée à un porte-satellites du train épicycloïdal ;
- l'entrée principale est en prise avec un pignon planétaire du train épicycloïdal et l'entrée d'hybridation est en prise avec une couronne du train épicycloïdal ;
- l'arbre de motorisation auxiliaire entraîne l'entrée d'hybridation du train épicycloïdal par l'intermédiaire d'un engrenage ;
- la sortie de traction du train épicycloïdal est solidaire à rotation avec un arbre d'une boîte de vitesses ;
- un embrayage est entre le moteur thermique et l'entrée principale du train épicycloïdal ;
- la boucle de transformation d'énergie comprend un évaporateur prévu pour recevoir de l'énergie thermique des gaz d'échappement du moteur thermique et pour réchauffer le fluide, une turbine dont une entrée est reliée à une sortie du fluide de l'évaporateur, la turbine ayant l'arbre de motorisation auxiliaire d'énergie mécanique qui est prévu pour être entraîné à rotation par le fluide pour apporter de l'énergie mécanique à l'entrée d'hybridation, un condenseur du fluide relié à une sortie de la turbine, un système de refroidissement étant associé au condenseur pour refroidir le fluide, et une pompe du fluide dont une entrée est reliée au condenseur et une sortie est reliée à une entrée du fluide de l'évaporateur.

Par ailleurs, l'invention a également pour objet un véhicule hybride automobile comportant un système moto propulseur, comprenant un moteur thermique dont le fonctionnement est susceptible de produire des gaz d'échappement, une boucle de transformation, via un fluide, de l'énergie des gaz d'échappement en énergie mécanique, cette boucle comprenant un arbre de motorisation auxiliaire d'énergie mécanique relié à un train épicycloïdal d'hybridation. Dans ce véhicule, le système moto propulseur est conforme à l'invention, en ayant sa sortie de traction qui est reliée à au moins une roue motrice du véhicule hybride.

D'autres buts, caractéristiques et avantages de l'invention apparaîtront au cours de la description suivante de plusieurs modes de réalisation, donnés à titre d'exemples non limitatifs, en regard des dessins joints dans lesquels :

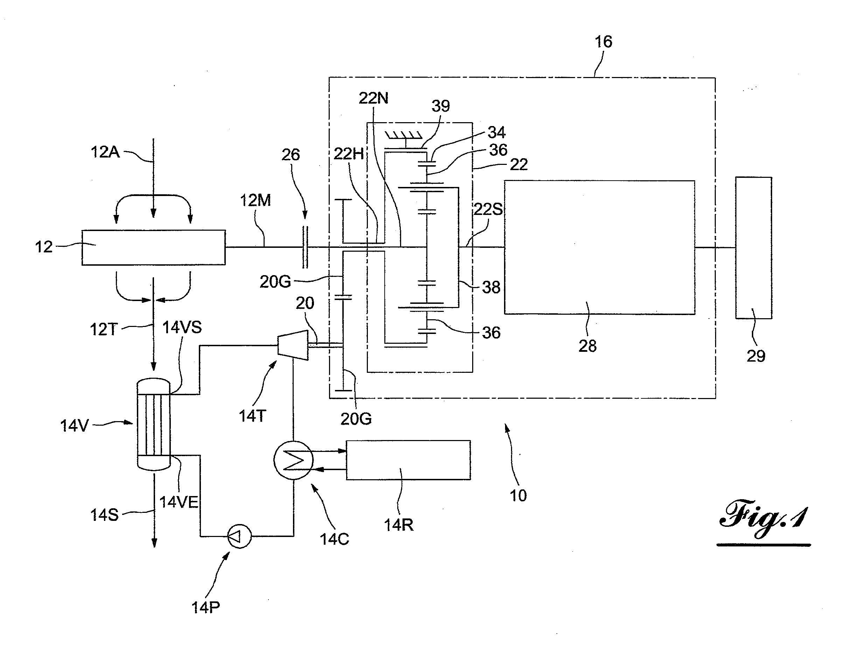

- la figure 1 est un schéma de principe montrant la cinématique dans un premier mode de réalisation d'un groupe moto propulseur selon l'invention ;
- la figure 2 est un schéma reprenant celui de la figure 1, montrant le fonctionnement en traction seulement par moteur thermique ;

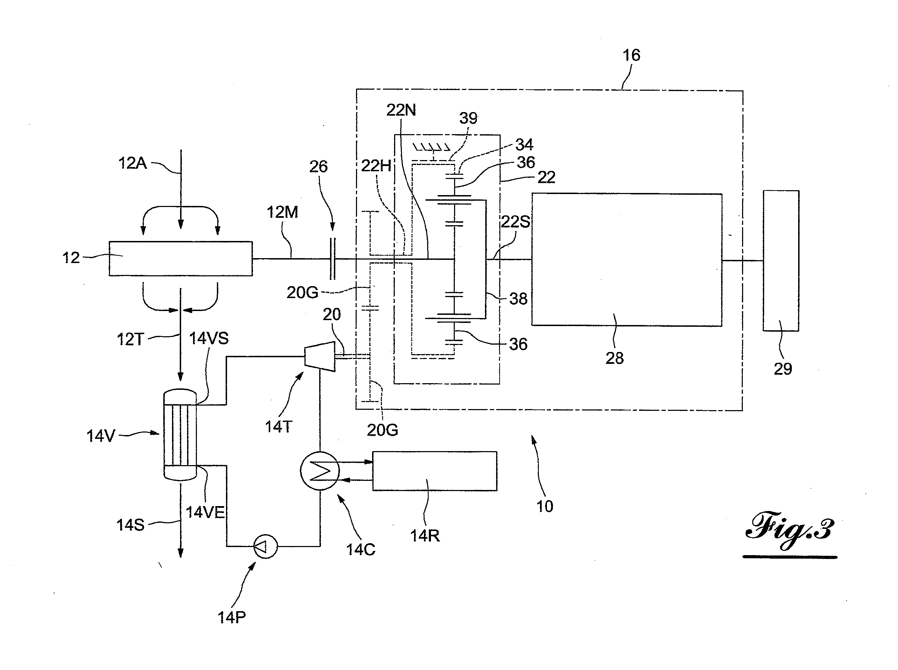

- la figure 3 est un schéma reprenant celui de la figure 1, montrant le fonctionnement en traction couplée par moteur thermique et par motorisation auxiliaire ;
- la figure 4 est un diagramme de puissance mécanique récupérable par la motorisation auxiliaire en fonction de la puissance thermique à l'échappement ;
- la figure 5 est un schéma de principe montrant la cinématique dans un deuxième mode de réalisation d'un groupe moto propulseur selon l'invention.

Sur les différentes figures, les mêmes références désignent des éléments identiques ou similaires.

En se reportant aux figures, la référence 10 désigne un groupe moto propulseur selon l'invention, comprenant de manière générale un moteur thermique 12 dont le fonctionnement est susceptible de produire des gaz d'échappement, une boucle de transformation d'énergie 14, via un fluide, et un ensemble de démultiplication 16. Cette boucle 14, via le fluide, transforme de l'énergie thermique des gaz d'échappement du moteur thermique 12 en énergie mécanique. Pour fournir de l'énergie mécanique à l'ensemble de démultiplication 16, ladite boucle de transformation 14 comprend un arbre de motorisation auxiliaire d'énergie mécanique 20 relié à un train épicycloïdal d'hybridation 22 appartenant à l'ensemble de démultiplication.

Le moteur thermique comporte classiquement une tubulure d'admission 12A pour l'alimenter en air frais et une tubulure d'échappement 12C pour évacuer les gaz d'échappement de combustion qui sont chauds quand le moteur thermique 12 est en fonctionnement depuis un certain temps. La boucle de transformation d'énergie 14 vise à utiliser l'énergie thermique des gaz d'échappement pour transformer cette énergie thermique en énergie mécanique utilisable comme hybridation de motorisation du véhicule.

La boucle de transformation d'énergie 14 est de type dénommée Rankine. Cette boucle 14 comprend, en série pour constituer une boucle fermée de fluide de transformation d'énergie, un évaporateur 14V pour réchauffer le fluide, une pompe 14P du fluide, un condenseur 14C pour refroidir le fluide et une turbine 14T. L'évaporateur 14V comprend typiquement un échangeur ayant une circulation des gaz d'échappement vers une sortie d'échappement 14S et une circulation du fluide qui est réchauffé par les gaz d'échappement. Ainsi, l'évaporateur 14V reçoit de l'énergie thermique des gaz d'échappement du moteur thermique et transmet cette énergie au fluide. L'évaporateur 14V comporte une sortie 14VS qui est reliée à la turbine 14T pour alimenter cette turbine en fluide réchauffé. La turbine 14T sert de machine de détente en ayant une entrée reliée à l'évaporateur 14V et une sortie reliée au condenseur du fluide 14C. La turbine 14T est entraînée à rotation par la circulation du fluide et elle produit de l'énergie mécanique entraînant l'arbre 20 de motorisation auxiliaire. Un système de refroidissement 14R est associé au condenseur 14C pour refroidir le fluide traversant ce dernier en venant de la turbine. La pompe du fluide 14P comprend une entrée qui est reliée à une sortie du condenseur 14C et une sortie qui est reliée en retour de fluide à l'entrée du fluide 14VE de l'évaporateur.

Le moteur thermique est la motorisation principale du moteur groupe moto propulseur 10. Il comporte classiquement un volant moteur, non représenté, qui entraîne un arbre moteur principal 12M relié à un embrayage 26 interposé entre le moteur et l'ensemble de démultiplication 16. Un tel embrayage est classique, en comportant par exemple deux disques appliqués l'un contre l'autre pour transmettre du couple et séparés pour débrayer, et ne sera pas décrit plus en détail.

L'ensemble de démultiplication 16 comprend une boîte de vitesses 28 qui est par exemple de type à arbre primaire et à arbre secondaire qui sont parallèles en portant chacun un pignon d'un engrenage de démultiplication. Une telle boîte de vitesses est classique et ne sera pas décrite plus en détail. La boîte de vitesses 28 est interposée entre le train épicycloïdal d'hybridation 22 et un système de transmission 29 permettant d'entraîner au moins une roue motrice du véhicule, par exemple deux roues motrices. L'arbre primaire de la boîte de vitesses 28 est relié à rotation à une sortie de traction 22S du train épicycloïdal d'hybridation.

Le train épicycloïdal d'hybridation 22 comporte une entrée principale 22N constituée par un arbre lié à rotation avec l'un des disques de l'embrayage 26, en sortie de ce dernier. Cet arbre d'entrée principale 22N porte un pignon planétaire 32 du train épicycloïdal. Ce pignon planétaire 32 est donc entraîné à rotation par le moteur thermique 11, au même régime, quand l'embrayage 26 est embrayé à transmission de couple.

Le train épicycloïdal d'hybridation 22 comporte une entrée d'hybridation 22H constituée par un arbre lié à rotation avec un engrenage 20G en prise avec l'arbre de motorisation auxiliaire 20 de la turbine. L'arbre d'entrée d'hybridation 22H tourne fou autour de l'arbre d'entrée principale 22N et il est solidaire à rotation avec une couronne à denture interne 34 dans laquelle peuvent tourner des satellites 36. Ces satellites 36 peuvent tourner autour du pignon planétaire 32 apte à être entraîné à rotation par le moteur thermique. Les satellites 36 sont en outre montés à rotation sur des axes de porte-satellites 38, ces axes étant solidaires à rotation avec l'arbre de sortie de traction 22S qui est en prise avec l'arbre primaire de la boîte de vitesses. Par ailleurs, la couronne 34 associée à l'entrée d'hybridation 22H peut être freinée par un frein à bande 39 qui est associé au bâti du train épicycloïdal.

Le fonctionnement du système moto propulseur 10 ressort déjà en partie de la description qui précède et va maintenant être détaillé.

Un premier cas d'utilisation du système moto propulseur 10 correspond au fonctionnement du véhicule en traction par le moteur thermique seul, quand la boucle de transformation d'énergie 14 ne fournit pas assez de puissance mécanique pour participer à la propulsion du véhicule. Il s'agit du fonctionnement quand les gaz d'échappement ne sont pas assez chauds, par exemple quand le moteur thermique vient d'être démarré et qu'il est encore froid. Il s'agit aussi du fonctionnement quand l'apport de l'hybridation n'est pas souhaité.

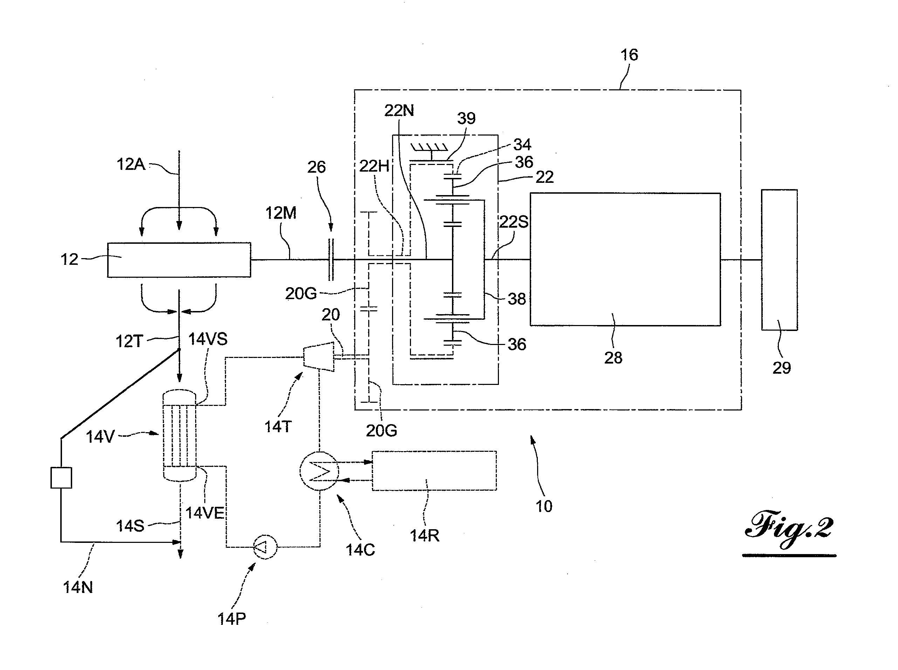

Dans le cas du fonctionnement du véhicule en traction par le moteur thermique seul, dans le système moto propulseur 10, la chaîne de traction reçoit de l'énergie dudit moteur thermique et l'entrée principale 22N du train épicycloïdal 22 est mise en rotation quand l'embrayage est fermé. A la figure 2, la transmission de puissance à partir du moteur thermique est indiquée en traits pleins dans la chaîne de traction.

Dans ce premier cas d'utilisation du système moto propulseur 10, sous l'action du moteur thermique, le pignon planétaire 32 tourne, entraîne à rotation les satellites 36 qui font tourner le porte-satellites 38 et la sortie de traction 22S associée. Les satellites tournent librement dans la couronne 34 qui est bloquée fixe par le frein 39 à bande. L'entrée d'hybridation 22H du train épicycloïdal 22 ne tourne pas. Le frein 39 permet en outre que la puissance mécanique du moteur thermique ne puisse pas être transférée à l'arbre 20 de motorisation auxiliaire. Ainsi, avantageusement, l'entrée d'hybridation 22H est associée au frein 39 qui est prévu pour être activé à freinage lorsque le système moto propulseur 10 a sa boucle de transformation d'énergie 14 qui est inactive pour un déplacement du véhicule avec la seule traction du moteur thermique.

Un deuxième cas d'utilisation du système moto propulseur 10 correspond au fonctionnement du véhicule en traction hybride. Dans ce cas du fonctionnement du véhicule en traction hybride, dans le système moto propulseur 10, la chaîne de traction reçoit de l'énergie dudit moteur thermique et de l'arbre 20 de motorisation auxiliaire. La boucle de transformation d'énergie 14 fournit de l'énergie mécanique du fait que les gaz d'échappement sont chauds.

Dans ce deuxième cas, l'entrée principale 22N du train épicycloïdal 22 est mise en rotation quand l'embrayage est fermé. Ainsi, le pignon planétaire 32 tourne, entraîne à rotation les satellites 36 qui font tourner le porte-satellites 38 et la sortie de traction 22S associée. De plus, outre la puissance mécanique du moteur thermique, de la puissance mécanique est apportée par l'arbre 20 de motorisation auxiliaire. L'entrée d'hybridation 22H du train épicycloïdal 22 tourne via l'engrenage 20G. Les satellites 36 tournent dans la couronne 34 qui est elle-même tournante, le frein 39 à bande étant désactivé et laissant ladite couronne tourner avec l'apport d'énergie d'hybridation. Les puissances s'additionnent et la vitesse des satellites 36 est dictée par l'apport le plus important d'énergie par le moteur thermique ou la turbine 14T, cette dernière de ces motorisations la plus active étant soulagée par l'apport d'énergie de la motorisation la moins active.

Ce fonctionnement a plusieurs intérêts :
- la récupération d'une partie de l'énergie thermique à l'échappement qui serait perdue en absence d'hybridation avec la boucle dans le cas d'un groupe motopropulseur classique sans hybridation ;
- la valorisation de l'énergie récupérée, un minimum d'étapes étant proposé entre la récupération et l'utilisation ;
- minimisation des pertes mécaniques au niveau moteur car, pour une même puissance nécessaire à la roue, le surplus de puissance récupéré par la boucle 14 de type Rankine permet de diminuer la puissance à fournir par le moteur thermique ;
- l'utilisation du train épicycloïdal et le fait de pouvoir piloter l'énergie récupérée au niveau de la boucle Rankine et donc la puissance disponible en sortie de la turbine, permet d'avoir un comportement identique aux boîtes de vitesses de type à Transmission à Variation de rapports Continue (CVT), c'est à dire qu'à iso-puissance, le moteur serait capable de travailler sur des meilleurs points de fonctionnement en consommant moins de carburant pour le même travail fourni.

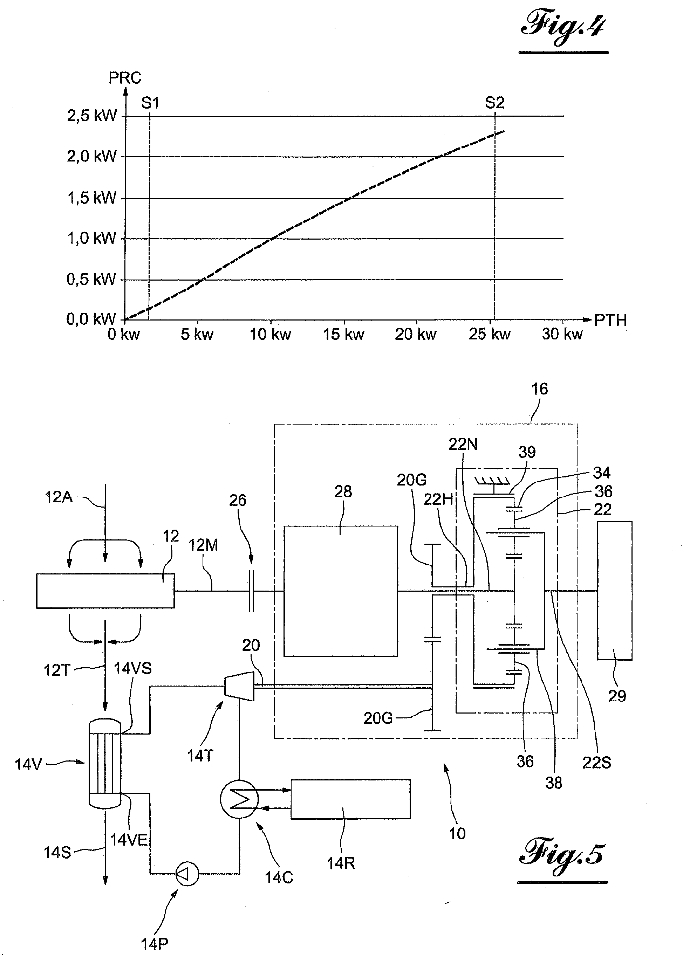

Une stratégie de couplage et pilotage de la boucle 14 de type Rankine avec le train épicycloïdal est adaptée pour permettre ces intérêts. La figure 4 est un diagramme de puissance mécanique récupérable PRC par la motorisation auxiliaire en fonction de la puissance thermique PTH à l'échappement, pour illustrer des conditions de couplage.

Durant le premier cas d'utilisation sans hybridation, le moteur thermique seul est couplé à la transmission tant que le débit de gaz d'échappement et la température n'atteignent une valeur de puissance déterminée par un premier seuil S1. En dessous de cette valeur, la boucle de transformation d'énergie 14 de type Rankine est inefficace. Le positionnement du niveau d'un premier seuil S1 (figure 4), est piloté en fonction du retour de capteurs de température et de débit des gaz associés au moteur thermique. Ces capteurs sont en particulier associés à la tubulure d'échappement 12C qui est représentée sur certaines des figures.

Lorsque le niveau de charge d'énergie thermique produite par le moteur thermique est compris entre la valeur de premier seuil S1 et un second seuil S2 de puissance thermique à l'échappement l'hybridation est active. Ainsi, la traction du véhicule ou la puissance à la roue est couplée entre la puissance fournie du moteur thermique et de la puissance récupérée et disponible à l'arbre de motorisation auxiliaire 20 en sortie de la turbine. En exemple de réalisation, le premier seuil S1 est de l'ordre de 2kW et le second seuil S2 est de l'ordre de 25 kW.

Dans l'utilisation du système moto propulseur 10, entre le seuil S1 et le seuil S2, il s'agit de la configuration hybride du deuxième cas d'utilisation du système moto propulseur 10 : la régulation de la charge du moteur thermique est effectuée en fonction de la puissance mécanique récupérée, cette puissance étant injectée dans la transmission par le train épicycloïdal 22, par la turbine 14T, pour maximiser le rendement de la traction et minimiser la consommation de carburant, avec un minimum d'étapes avant l'utilisation de la puissance récupérée.

Si la valeur de second seuil S2 est dépassée, un système de contournement 14N des gaz d'échappement, représenté à la figure 2, est actionné pour dévier une partie des gaz vers un cheminement classique ne passant pas par l'évaporateur ou vers un autre système de récupération autre que la boucle de type Rankine.

Différentes solutions sont envisageables pour utiliser le l'énergie thermique dans le contournement qui peut être :
- un système thermoélectrique par effet de Seebeck pour produire de l'électricité et alimenter les capteurs ou actionneurs ;
- un système de stockage de chaleur par des matériaux à changement de phase pour utiliser cette chaleur dans le but du pré conditionnement du moteur lors du démarrage à froid ;
- un système générateur de pompe à chaleur par adsorption pour le chauffage et la climatisation.

La figure 5 est un schéma de principe montrant la cinématique dans un deuxième mode de réalisation d'un groupe moto propulseur selon l'invention. La boîte de vitesses est interposée entre l'embrayage 26 et le train épicycloïdal 22 qui est donc plus éloigné du moteur thermique et plus proche du système de transmission 29 pour relier les roues motrices au système moto propulseur selon l'invention. L'entrée d'hybridation 22H est solidaire à rotation avec l'arbre secondaire de la boîte de vitesses. La sortie de traction 22S du train épicycloïdal d'hybridation est directement reliée au système de transmission 29. Le fonctionnement est inchangé par rapport au premier mode de réalisation.

En variante non représentée, l'embrayage est positionné entre le train épicycloïdal et la boîte de vitesses, ou encore en aval de la transmission hybridée, juste en amont du système de transmission.

En variante non représentée, tout type classique de train épicycloïdal peut être utilisé à la place de celui décrit précédemment. Par exemple, au lieu d'avoir un unique pignon, les satellites peuvent être doubles. Dans cette variante les satellites ont un pignon en relation avec le pignon planétaire et un autre pignon en relation avec la couronne qui reste associée à un frein. La sortie de traction reste le porte-satellites. Seule la démultiplication est changée.

En autre variante non représentée de train épicycloïdal, l'entrée principale est une couronne à denture interne, l'entrée d'hybridation reste une couronne à denture interne, les satellites sont doubles en ayant en pignon en relation avec l'une des couronnes et l'autre des pignons en relation avec l'autre des couronnes. La sortie de traction reste le porte-satellites.

En autre variante non représentée de train épicycloïdal, les satellites sont encore doubles et il n'y a pas de couronne. L'entrée principale est un pignon planétaire en prise avec l'un des pignons de chaque satellite. L'entrée d'hybridation, qui est associée à un frein, est un pignon planétaire en prise avec l'autre des pignons de chaque satellite. La sortie de traction reste le porte-satellites.

Avantageusement, hormis la présence de la boucle de transformation d'énergie 14 et du train épicycloïdal, peu de modifications de composant existant d'un groupe moto propulseur sont apportées pour mettre en oeuvre l'invention, au bénéfice du coût de réalisation du système selon l'invention. Ce système permet d'améliorer l'utilisation du moteur thermique, au bénéfice de la réduction de la consommation. En effet, à performances équivalentes, le véhicule peut être équipé d'un moteur thermique de puissance plus modeste.

## Revendications

1. Système moto propulseur (10) pour véhicule hybride, comprenant un moteur thermique dont le fonctionnement est susceptible de produire des gaz d'échappement, une boucle de transformation (14), via un fluide, de l'énergie des gaz d'échappement en énergie mécanique, cette boucle comprenant un arbre de motorisation auxiliaire d'énergie mécanique (20) relié à un train épicycloïdal d'hybridation (22), **caractérisé en ce que** le train épicycloïdal (22) comporte une entrée d'hybridation (22H) entraînée par ledit arbre de motorisation auxiliaire (20), une entrée principale (22N) reliée à un arbre moteur principal (12M) relié à un volant moteur du moteur thermique et une sortie de traction (22S) qui est adaptée à être reliée à au moins une roue motrice du véhicule hybride.

2. Système selon la revendication précédente, **caractérisé en ce que** l'entrée d'hybridation (22H) est associée à un frein (39) prévu pour être activé à freinage lorsque le système moto propulseur (10) a sa boucle de transformation d'énergie (14) qui est inactive pour un déplacement du véhicule avec la seule traction du moteur thermique.

3. Système selon l'une quelconque des revendications précédentes, **caractérisé en ce que** l'entrée d'hybridation (22H) est active quand le niveau de charge d'énergie thermique produite par le moteur thermique est compris entre une valeur de premier seuil (S1) et une valeur de second seuil (S2) de puissance thermique à l'échappement.

4. Système selon l'une quelconque des revendications précédentes, **caractérisé en ce que** la sortie de traction (22S) est reliée à un porte-satellites (38) du train épicycloïdal.

5. Système selon la revendication précédente, **caractérisé en ce que** l'entrée principale (22N) est en prise avec un pignon planétaire (32) du train épicycloïdal et l'entrée d'hybridation (22H) est en prise avec une couronne (34) du train épicycloïdal.

6. Système selon l'une quelconque des revendications précédentes, **caractérisé en ce que** l'arbre de motorisation auxiliaire (20) entraîne l'entrée d'hybridation (22H) du train épicycloïdal par l'intermédiaire d'un engrenage (20G).

7. Système selon l'une quelconque des revendications précédentes, **caractérisé en ce que** la sortie de traction (22S) du train épicycloïdal est solidaire à rotation avec un arbre d'une boîte de vitesses (28).

8. Système selon l'une quelconque des revendications précédentes, **caractérisé en ce qu'**un embrayage (26) est entre le moteur thermique et l'entrée principale (22N) du train épicycloïdal.

9. Système selon l'une quelconque des revendications précédentes, **caractérisé en ce que** la boucle de transformation d'énergie (14) comprend un évaporateur (14V) prévu pour recevoir de l'énergie thermique des gaz d'échappement du moteur thermique et pour réchauffer le fluide, une turbine (14T) dont une entrée est reliée à une sortie du fluide (14VS) de l'évaporateur (14V), la turbine ayant l'arbre de motorisation auxiliaire d'énergie mécanique (20) qui est prévu pour être entraîné à rotation par le fluide pour apporter de l'énergie mécanique à l'entrée d'hybridation, un condenseur (14C) du fluide relié à une sortie de la turbine (14T), un système de refroidissement (14R) étant associé au condenseur pour refroidir le fluide, et une pompe du fluide (14P) dont une entrée est reliée au condenseur (14C) et une sortie est reliée à une entrée du fluide (14VE) de l'évaporateur.

10. Véhicule hybride automobile comportant un système moto propulseur (10), comprenant un moteur thermique dont le fonctionnement est susceptible de produire des gaz d'échappement, une boucle de transformation (14), via un fluide, de l'énergie des gaz d'échappement en énergie mécanique, cette boucle comprenant un arbre de motorisation auxiliaire d'énergie mécanique (20) relié à un train épicycloïdal d'hybridation (22), **caractérisé en ce que** le système moto propulseur (10) est conforme à l'une quelconque des revendications précédentes dont la sortie de traction (22S) qui est reliée à au moins une roue motrice du véhicule hybride.

## Patentansprüche

1. Motorantriebssystem (10) für Hybridfahrzeug, das eine Brennkraftmaschine umfasst, deren Funktionieren Abgase erzeugen kann, eine Umwandlungsschleife (14) über ein Fluid der Energie der Abgase in mechanische Energie, wobei diese Schleife eine Hilfsantriebswelle mechanischer Energie (20) umfasst, die mit einem Hybridisierungsumlaufgetriebezug (22) verbunden ist, **dadurch gekennzeichnet, dass** der Umlaufgetriebezug (22) einen Hybridisierungseingang (22H) umfasst, der von der Hilfsantriebswelle (20) angetrieben wird, einen Haupteingang (22N), der mit einer Hauptantriebswelle (12M) verbunden ist, die mit einem Antriebsschwungrad der Brennkraftmaschine verbunden ist, und einen Traktionsausgang (22S), der angepasst ist, um mit mindestens einem Antriebsrad des Hybridfahrzeugs verbunden zu sein.

2. System gemäß dem vorhergehenden Anspruch, **dadurch gekennzeichnet, dass** der Hybridisierungseingang (22H) mit einer Bremse (39) assoziiert ist, die vorgesehen ist, um bremsend aktiviert zu werden, wenn das Motorantriebssystem (10) seine Energieumwandlungsschleife (14) bei einem Fahren des Fahrzeugs allein mit der Traktion der Brennkraftmaschine inaktiv hat.

3. System nach einem der vorhergehenden Ansprüche, **dadurch gekennzeichnet, dass** der Hybridisierungseingang (22H) aktiv ist, wenn das Wärmeenergieladeniveau, das von der Brennkraftmaschine erzeugt wird, zwischen einem ersten Schwellenwert (S1) und einem zweiten Schwellenwert (S2) Wärmeleistung am Auspuff liegt.

4. System nach einem der vorhergehenden Ansprüche, **dadurch gekennzeichnet, dass** der Traktionsausgang (22S) mit einem Planetenradträger (38) des Umlaufgetriebezugs verbunden ist.

5. System nach dem vorhergehenden Anspruch, **dadurch gekennzeichnet, dass** der Haupteingang (22N) mit einem Planetenrad (32) des Umlaufgetriebezugs im Eingriff ist, und der Hybridisierungseingang (22H) mit einem Kranz (34) des Umlaufgetriebezugs im Eingriff ist.

6. System nach einem der vorhergehenden Ansprüche, **dadurch gekennzeichnet, dass** die Hilfsantriebswelle (20) den Hybridisierungseingang (22H) des Umlaufgetriebezugs über ein Radgetriebe (20G) antreibt.

7. System nach einem der vorhergehenden Ansprüche, **dadurch gekennzeichnet, dass** der Traktionsausgang (22S) des Umlaufgetriebezugs in Drehung fest mit einer Welle eines Schaltgetriebes (28) verbunden ist.

8. System nach einem der vorhergehenden Ansprüche, **dadurch gekennzeichnet, dass** eine Kupplung (26) zwischen der Brennkraftmaschine und dem Haupteingang (22N) des Umlaufgetriebezugs ist.

9. System nach einem der vorhergehenden Ansprüche, **dadurch gekennzeichnet, dass** die Energieumwandlungsschleife (14) einen Verdampfer (14V) umfasst, der vorgesehen ist, um Wärmeenergie der Abgase der Brennkraftmaschine zu empfangen und um das Fluid zu erwärmen, eine Turbine (14T), deren Eingang mit einem Ausgang des Fluids (14VS) des Verdampfers (14V) verbunden ist, wobei die Turbine die Hilfsantriebswelle mechanischer Energie (20) hat, die vorgesehen ist, um in Drehung von dem Fluid angetrieben zu werden, um dem Hybridisierungseingang mechanische Energie zuzuführen, einen Kondensator (14C) der Flüssigkeit, der mit einem Ausgang der Turbine (14T) verbunden ist, ein Kühlsystem (14R), das zu dem Kondensator gehört, um das Fluid abzukühlen, und eine Fluidpumpe (14P), deren Eingang mit dem Kondensator (14C) verbunden ist, und ein Ausgang ist mit einem Fluideingang (14VE) des Verdampfers verbunden.

10. Hybridkraftfahrzeug, das ein Motorantriebssystem (10) umfasst, das eine Brennkraftmaschine umfasst, deren Funktionieren Abgase erzeugen kann, eine Umwandlungsschleife (14) über ein Fluid der Energie der Abgase in mechanische Energie, wobei diese Schleife eine Hilfsantriebswelle mechanischer Energie (20) umfasst, die mit einem Hybridisierungsumlaufgetriebezug (22) verbunden ist, **dadurch gekennzeichnet, dass** das Motorantriebssystem (10) einem der vorhergehenden Ansprüche entspricht, dessen Traktionsausgang (22S) mit mindestens einem Antriebsrad des Hybridfahrzeugs verbunden ist.

## Claims

1. A power train system (10) for a hybrid vehicle, including a heat engine, the functioning of which is able to produce exhaust gases, a transformation loop (14), via a fluid, of the energy of the exhaust gases into mechanical energy, this loop including a mechanical energy auxiliary power shaft (20) connected to a hybridization planetary gear train (22), **characterized in that** the planetary gear train (22) comprises a hybridization input (22H) driven by said auxiliary power shaft (20), a main input (22N) connected to a main drive shaft (12M) connected to a flywheel of the heat engine and a traction output (22S) which is adapted to be connected to at least one drive wheel of the hybrid vehicle.

2. The system according to the preceding claim, **characterized in that** the hybridization input (22H) is associated with a brake (39) provided so as to be activated for braking when the power train system (10) has its energy transformation loop (14) which is inactive for a movement of the vehicle with the sole traction of the heat engine.

3. The system according to any one of the preceding claims, **characterized in that** the hybridization input (22H) is active when the charge level of heat energy produced by the heat engine is comprised between a first threshold value (S1) and a second threshold value (S2) of thermal power at the exhaust.

4. The system according to any one of the preceding claims, **characterized in that** the traction output (22S) is connected to a planetary carrier (38) of the planetary gear train.

5. The system according to the preceding claim, **characterized in that** the main input (22N) is engaged with a planetary pinion (32) of the planetary gear train and the hybridization input (22H) is engaged with a crown (34) of the planetary gear train.

6. The system according to any one of the preceding claims, **characterized in that** the auxiliary power shaft (20) drives the hybridization input (22H) of the planetary gear train by means of a gearing (20G).

7. The system according to any one of the preceding claims, **characterized in that** the traction output (22S) of the planetary gear train is rotationally integral with a shaft of a gearbox (28).

8. The system according to any one of the preceding claims, **characterized in that** a clutch (26) is between the heat engine and the main input (22N) of the planetary gear train.

9. The system according to any one of the preceding claims, **characterized in that** the energy transformation loop (14) includes an evaporator (14V) provided for receiving heat energy of the exhaust gases of the heat engine and for reheating the fluid, a turbine (14T), an inlet of which is connected to an outlet of the fluid (14VS) from the evaporator (14V), the turbine having the mechanical energy auxiliary power shaft (20) which is provided so as to be driven in rotation by the fluid to bring mechanical energy to the hybridization input, a condenser (14C) of the fluid connected to an outlet of the turbine (14T), a cooling system (14R) being associated with the condenser to cool the fluid, and a pump of the fluid (14P), an inlet of which is connected to the condenser (14C) and an outlet of which is connected to an inlet of the fluid (14VE) of the evaporator.

10. A hybrid motor vehicle comprising a power train system (10), including a heat engine, the functioning of which is able to produce exhaust gases, a transformation loop (14), via a fluid, of the energy of the exhaust gases into mechanical energy, this loop including a mechanical energy auxiliary power shaft (20) connected to a hybridization planetary gear train (22), **characterized in that** the power train system (10) is in accordance with any one of the preceding claims, the traction output (22S) of which is connected to at least one drive wheel of the hybrid vehicle.
